# EUROPÄISCHE PATENTSCHRIFT

(11) **EP 0 779 104 B1**
(45) Veröffentlichungstag und Bekanntmachung des Hinweises auf die Patenterteilung: **10.10.2001**
(21) Anmeldenummer: 96117895.1
(22) Anmeldetag: 08.11.1996
(51) Int. Cl.: B01L 9/00

(54) **Quaderförmiger Vorratsbehälter**
Parallelepipedal storage container
Récipient de stockage parallélépipédique

(30) Priorität: 15.12.1995 DE 19546895
(43) Veröffentlichungstag der Anmeldung: 18.06.1997
(73) Patentinhaber: HEINRICH AMELUNG GmbH, D-32657 Lemgo (DE)
(72) Erfinder: Amelung, Rolf, 32657 Lemgo (DE)
(74) Vertreter: Stracke, Alexander, Dipl.-Ing.

(56) Entgegenhaltungen:
- WO-A-94/02828
- DE-U- 9 202 381
- GB-A- 2 151 782
- US-A- 4 634 575

## Beschreibung

Die vorliegende Erfindung betrifft einen quaderförmigen Vorratsbehälter gemäß dem Oberbegriff des Anspruchs 1. Ein derartiger Vorratsbehälter ist aus der WO 94/02828 A bekannt. Dabei wird die Schiebeleiste durch einen Ausstoßrechen betätigt, der durch die Rückwand des Vorratsbehälters an die Schiebeleiste angreift.

Weiter ist ein Vorratsbehälter aus der DE 92 02 381 U bekannt

Prinzipiell hat sich der dort gezeigte und beschriebene Vorratsbehälter bewährt. Probleme können sich jedoch beim Einsatz der Abdeckfolie insofern ergeben, als sich auf dieser, insbesondere bei einer längeren Lagerzeit, im Bereich der Durchbrechungen Staub ansammelt, der beim Herausziehen der Folie abgestreift wird, in die Meßgefäße fallen kann und dadurch das Meßergebnis unter Umständen beeinträchtigt.

Desweiteren können dann, wenn die Meßgefäße mit Kugeln bestückt sind, statische Aufladungen der Folie dazu führen, daß diese Kugeln aus den Meßgefäßen herausgezogen werden, so daß diese für den gedachten Untersuchungseinsatz nicht mehr geeignet sind und es zu Maschinenstörungen kommen kann.

Die Seitenwände des bekannten Vorratsbehälters werden nach dem Befüllen mit Meßgefäßen und dem Auflegen der Folie durch Ultraschall miteinander verschweißt. Dabei besteht die Gefahr, daß die Folie ebenfalls mit den Wänden des Vorratsbehälters verschweißt, so daß ein einwandfreies und leichtes Entfernen der Folie anschließend nicht in jedem Fall gewährleistet ist.

Der voliegenden Erfindung liegt daher die Aufgabe zugrunde, einen Vorratsbehälter der gattungsgemäßen Art so zu gestalten, daß eine Verschmutzung der Meßgefäße ausgeschlossen und ihre Verwendungsfähigkeit in jedem Fall uneingeschränkt gewährleistet ist.

Diese Aufgabe wird durch einen Vorratsbehälter gelöst, der die Merkmale des Anspruches 1 aufweist.

Durch diese konstruktive Ausgestaltung können nun die Einlaßöffnungen sämtlicher Meßgefäße vollständig durch die obere Gehäuseseite des Vorratsbehälters abgedeckt werden, so daß die Funktion der bekannten Folie von der zugeordneten Breitseite des Vorratsbehälters übernommen wird.

Da die Einlaßöffnungen der Meßgefäße zu keiner Zeit bis zu deren Einsatz in einem Untersuchungsautomaten offen liegen, ist es auch nicht möglich, daß auf der Abdekkung angesammelter Staub in die Meßgefäße gelangen kann.

Die Untersuchungsgenauigkeit bzw. die Sicherheit der Messung wird dadurch wesentlich verbessert.

Aufgrund der fehlenden Folie ist eine statische Aufladung der Meßgefäße gleichfalls ausgeschlossen, so daß Probleme bei der Messung durch herausgezogene Kugeln-wie beschrieben - nicht mehr auftreten.

Die sich aus einem Festschweißen der Folie ergebenden Nachteile sind ebenfalls ausgeschlossen, da ja, wie erwähnt, auf den Einsatz einer Folie verzichtet werden kann.

Naturgemäß ist damit auch eine Kosteneinsparung verbunden, die zum einen aus der Folienherstellung und zum ändern aus deren Entsorgung resultieren.

Nach einer vorteilhaften Ausgestaltung der Erfindung ist vorgesehen, daß sich die Durchbrechungen auf der die Oberseite des Vorratsbehälters bildenden Breitseite, und zwar in den den Stirnseiten benachbaren Randbereichen und teilweise in Fortsetzung im rückseitigen Bereich angeordnet sind.

Dabei sind die rückseitigen Durchbrechungen in ihrer Länge so bemessen, daß die Schiebeleiste von den Zinken des Ausstoßrechens sicher mitgenommen wird.

Ein Ausführungsbeispiel der Erfindung wird nachfolgend anhand der beigefügten Zeichnungen beschrieben.

### Es zeigen:

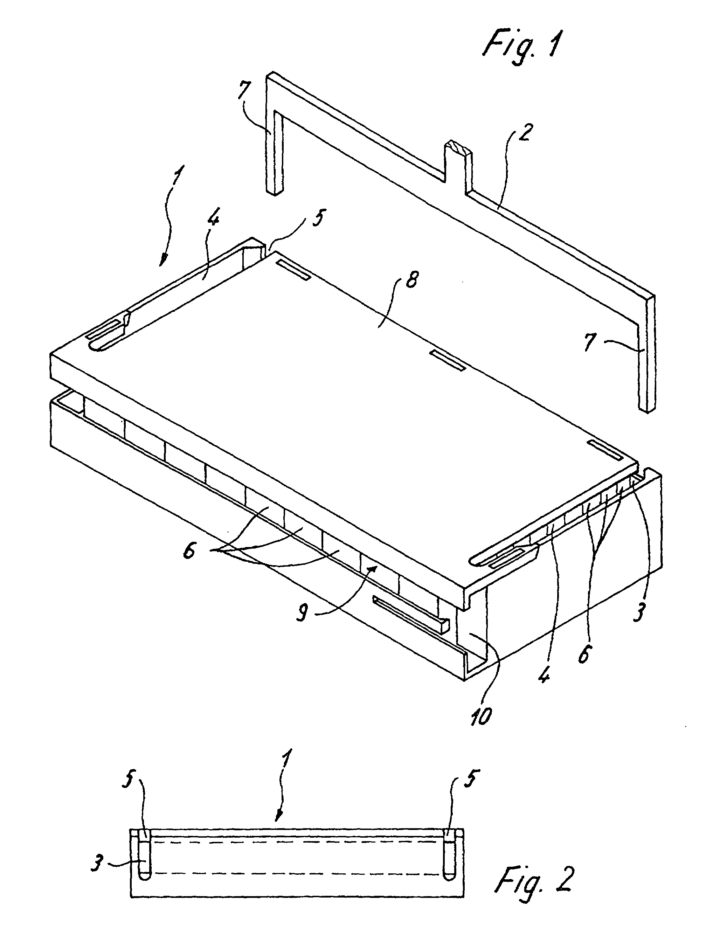

Figur 1 einen erfindungsgemäßen Vorratsbehälter in einer perspektivischen Ansicht,
Figur 2 den Vorratsbehälter in einer Rückansicht.

Der in den Figuren gezeigte quaderförmige Vorratsbehälter 1 ist mit einer Vielzahl von gleichfalls quaderförmigen Meßgefäßen 6 bestückt, die in dem Vorratsbehälter 1 reihenförmig, nebeneinanderstehend angeordnet sind und die der Aufnahme von zu untersuchenden Flüssigkeiten, wie Blut, Blutplasma o.dgl. dienen.

In einer die Oberseite 8 des Vorratsbehälter 1 bildenden Breitseite sind zwei quer zur Längsachse verlaufende, parallel und mit Abstand zueinander angeordnete Schlitzförmige Durchbrechungen 4 vorgesehen. Diese sind im unmittelbaren Randbereich der Oberseite 8 der jeweiligen Stirnseite des Vorratsbehälters 1 benachbart plaziert und erstrecken sich bis in den rückseitigen Bereich, wo sie gleichfalls schlitzförmige Durchbrechungen 5 bilden.

In diesen Durchbrechungen 4,5 sind die Zinken 7 eines Ausstoßrechens 2 führbar, die dabei an einer Schiebeleiste 3 anliegen, die sich in Längsachsrichtung des Vorratsbehälters 1 über die gesamte Länge einer Längsreihe der Meßgefäße 6 erstreckt, wobei die Schiebeleiste 3 zwischen der Rückseite des Vorratsbehälters 1 und der letzten Reihe von Meßgefäßen 6 angeordnet ist.

Die zur Oberseite 8 hin ausgerichteten Einfüllöffnungen der Meßgefäße 6 sind vollständig von der Oberseite 8 abgedeckt, d.h. die Durchbrechungen 4,5 befinden sich außerhalb des Überdeckungsbereiches.

Der Ausstoßschlitz 9 ist vorderseitig angeordnet und an einer Stirnseite des Vorratsbehälters 1 mit einer Öffnung 10 versehen, durch die die Meßgefäße 6 einzeln austreten und einem Untersuchungsautomaten zugeführt werden können.

### Bezugszeichenliste

- 1: Vorratsbehälter
- 2: Ausstoßrechen
- 3: Schiebeleiste
- 4: Durchbrechung
- 5: Durchbrechung
- 6: Meßgefäß
- 7: Zinken
- 8: Oberseite
- 9: Ausstoßschlitz
- 10: Öffnung

## Patentansprüche

1. Quaderförmiger Vorratsbehälter (1), der eine Oberseite (8), eine Vorderseite, eine dieser gegenüber liegende Rückseite, zwei sich gegenüber liegende Stirnseiten sowie Durchbrechungen (4, 5) aufweist, in denen ein Ausstoßrechen (2) fahrbar ist, durch den reihenförmig angeordnete Meßgefäße (6) zur Aufnahme von zu untersuchenden Flüssigkeiten wie Blut oder Blutplasma in einen vorderseitigen Ausstoßschlitz (9) schiebbar sind, wobei zwischen der dem Ausstoßschlitz (9) abgewandt liegenden letzten Reihe der Meßgefäße (6) und der Rückseite des Vorratsbehälters (1) eine Schiebeleiste (3)angeordnet ist, an der der Ausstoßrechen (2) anliegt, und wobei die Durchbrechungen (4, 5) seitlich außerhalb des durch die Oberseite (8) gebildeten Überdeckungsbereiches der Meßgefäße (6) angeordnet sind, **dadurch gekennzeichnet, daß** die Durchbrechungen (4, 5) im äußersten Randbereich der Oberseite (8) und der Rückseite den sich gegenüber liegenden Stirnseiten benachbart vorgesehen sind.

## Claims

1. Block-shaped storage container (1), which has an upper side (8), a front side, a rear side opposite thereto, two mutually opposite end faces, and passages (4, 5) in which an ejector rake (2) can be guided, by which measuring vessels (6), which are arranged in the manner of rows, for reception of liquids such as blood or blood plasma, which are to be investigated, are pushable into a discharge slot (9) at the front side, wherein a pusher strip (3), against which the ejector rake (2) bears, is arranged between the rear side of the storage container (1) and the last row of measuring vessels (6) remote from the discharge slot (9), and wherein the passages (4, 5) are arranged laterally outside the cover region, which is formed by the upper side (8), of the measuring vessels (6), **characterised in that** the passages (4, 5) are provided in the outermost edge region of the upper side (8) and the rear side adjacent to the mutually opposite end faces.

## Revendications

1. Réservoir parallélépipédique (1), qui présente une face supérieure (8), une face avant, une face arrière opposée à celle-ci, deux faces frontales mutuellement opposées, ainsi que des passages (4, 5), dans lesquels peut passer un râteau d'éjection (2), à travers lequel des récipients de mesure (6) disposés en rangée pour recevoir des liquides à analyser comme du sang ou du plasma sanguin peuvent être poussés dans une fente d'éjection avant (9), une barre de poussée (3) étant placée entre la dernière rangée de récipients de mesure (6) opposée au râteau d'éjection (9) et la face arrière du réservoir (1), barre sur laquelle s'appuie le râteau d'éjection (2), et les passages (4, 5) étant placés latéralement à l'extérieur de la zone de recouvrement des récipients de mesure (6) formée par la face supérieure (8), **caractérisé en ce que** les passages sont prévus dans la zone de bord extérieure de la face supérieure (8) et de la face arrière au voisinage des faces frontales mutuellement opposées.
